# EUROPÄISCHE PATENTSCHRIFT

(11) **EP 3 818 739 B1**
(45) Veröffentlichungstag und Bekanntmachung des Hinweises auf die Patenterteilung: **07.06.2023**
(21) Anmeldenummer: 19733987.2
(22) Anmeldetag: 16.06.2019
(51) Int. Cl.: H04W 12/08, H04W 12/04, H04W 12/00, H04B 10/116, H04L 9/40, H04W 12/71, H04W 12/77

(54) **VERFAHREN ZUM ANMELDEN EINES ZIELGERÄTS AN EIN NETZWERK**
METHOD FOR REGISTERING A TARGET DEVICE IN A NETWORK
PROCÉDÉ POUR CONNECTER UN APPAREIL CIBLE À UN RÉSEAU

(30) Priorität: 08.07.2018 DE 102018116500
(43) Veröffentlichungstag der Anmeldung: 12.05.2021
(73) Patentinhaber: Rückert, Tobias, 73650 Winterbach (DE)
(72) Erfinder: Rückert, Tobias, 73650 Winterbach (DE)
(74) Vertreter: Heidinger, Andreas
(86) Internationale Anmeldenummer: PCT/EP2019/065790
(87) Internationale Veröffentlichungsnummer: WO 2020/011488

(56) Entgegenhaltungen:
- DE-A1-102016 014 479
- US-A1- 2014 057 676
- US-A1- 2015 317 467
- US-A1- 2016 021 635

## Beschreibung

Die Erfindung betrifft ein Verfahren zum Anmelden eines Zielgeräts an ein Netzwerk mit den Merkmalen des Anspruchs 1.

Viele elektronische Geräte für den industriellen, gewerblichen wie auch den privaten Gebrauch verfügen über eine Schnittstelle, über die Informationen, wie beispielsweise Statusinformationen oder Messwerte ausgelesen werden können oder das Gerät angesteuert, beispielsweise aktiviert, deaktiviert oder konfiguriert werden kann. Beispiele dafür sind im privaten Bereich Wetterstationen, die die Temperatur und die Luftqualität messen, Überwachungskameras, Klimaanlagen, Fernsehgeräte, Heizungssteuerungen, Kühlschränke und im industriellen Bereich Bearbeitungsmaschinen oder Zugangssysteme. Derartige elektronische Geräte werden im Folgenden als Zielgeräte bezeichnet. Die Verbindung zu dem entsprechenden Gerät kann zumeist mittels spezieller Programme auf einem Computer, einem Tablet-Computer, einem Smartphone, einem so genannten Wearable Device oder einem anderen elektronischen Gerät, das Programme oder Apps ausführen kann, aufgebaut werden. Diese elektronischen Geräte werden im Folgenden als Endgeräte bezeichnet. Um die genannte Verbindung herstellen zu können, ist beispielsweise eine Kopplung über eine drahtlose Verbindung insbesondere das Internet notwendig, dazu ist eine Anmeldung des Zielgeräts an ein Netzwerk, beispielsweise an ein WLAN-Netzwerk notwendig. Die Anmeldung des Zielgeräts an ein Netzwerk, beispielsweise an ein passwortgeschütztes WLAN kann recht aufwändig und umständlich sein, insbesondere da die Zielgeräte häufig keine Tastatur aufweisen.

Die US 2015/3174567 A1 und US 2016/021635 A1 beschreiben Verfahren zum Anmelden eines Geräts an einem Netzwerk. Die US 2014/057676 A1 beschreibt ein Verfahren zur optischen Datenübertragung.

Demgegenüber ist es insbesondere die Aufgabe der Erfindung, ein Verfahren zum Anmelden eines Zielgeräts an ein Netzwerk vorzuschlagen, das einfach durchführbar ist. Erfindungsgemäß wird die Aufgabe durch ein Verfahren mit den Merkmalen des Anspruchs 1 gelöst.

Das erfindungsgemäße Verfahren zum Anmelden eines Zielgeräts an ein Netzwerk weist wenigstens folgende Schritte auf, die insbesondere in der angegebenen Reihenfolge ausgeführt werden:
- Senden einer elektronischen Anmeldenachricht von einem Endgerät an eine universelle Kommunikationsplattform durch einen User, wobei die Anmeldenachricht Informationen über eine Identität des Zielgeräts und eine Anmeldemöglichkeit zum genannten Netzwerk enthält und zum Zeitpunkt des Sendens der elektronischen Anmeldenachricht keine Kommunikationsverbindung zwischen dem Endgerät und dem Zielgerät besteht,
- Integrieren der genannten Informationen der Anmeldenachricht in eine Anmeldeinformationsnachricht durch die universelle Kommunikationsplattform,
- Senden der genannten Anmeldeinformationsnachricht von der universellen Kommunikationsplattform an das Endgerät des Users,
- Aussenden der in der Anmeldeinformationsnachricht enthaltenen Informationen in Form von moduliertem Licht durch das genannte Endgerät des Users,
- Erfassen der genannten Informationen durch einen lichtempfindlichen Sensor des Zielgeräts und Extrahieren der Informationen über die Anmeldemöglichkeit zum genannten Netzwerk in Form eines Passworts und
- Anmelden am Netzwerk unter Nutzung der genannten Anmeldemöglichkeit in Form eines Passworts durch das Zielgerät.

Unter einem "Anmelden eines Zielgeräts an einem Netzwerk" soll dabei verstanden werden, dass eine Kommunikationsverbindung zwischen dem Zielgerät und anderen Teilnehmern in dem genannten Netzwerk ermöglicht wird. Unter einer "Kommunikationsverbindung" wird hier verstanden, dass elektronische Geräte Informationen austauschen, also beispielsweise elektronische Nachrichten austauschen können. Das Netzwerk ist insbesondere zumindest zum Teil drahtlos, also beispielsweise als ein WLAN-, ein Bluetooth oder ein so genanntes Long Range Wide Area -Netzwerk ausgeführt. Das Netzwerk ist insbesondere mit dem Internet verbunden, so dass nach dem Anmelden des Zielgeräts am Netzwerk eine Verbindung zwischen Zielgerät und dem Internet besteht. Nach dem Anmelden des Zielgeräts am Netzwerk ist insbesondere eine Kommunikation zwischen einem Endgerät eines Users und dem Zielgerät möglich. Das genannte Endgerät kann ebenfalls in das Netzwerk eingebunden sein. Es ist aber auch möglich, dass das Endgerät mit einer so genannten universellen Kommunikationsplattform kommuniziert, die wiederum über das Internet und/oder das Netzwerk mit dem Zielgerät kommuniziert. Eine Anmeldung des Zielgeräts an ein Netzwerk ist beispielsweise nach dem Kauf des Zielgeräts, also bei einer so genannten Erstinbetriebnahme notwendig.

Der User sendet zum Anmelden des Zielgeräts zunächst eine elektronische Anmeldenachricht an eine universelle Kommunikationsplattform. Die universelle Kommunikationsplattform verfügt dazu über mindestens eine so genannte Empfangsadresse, an die der User die elektronische Nachricht an die universelle Kommunikationsplattform adressieren kann. Eine Empfangsadresse kann beispielsweise als eine E-Mail-Adresse, eine Mobilfunknummer, ein WhatsApp^{®} oder Facebook^{®}-Account oder Ähnliches ausgeführt sein. Unter einer universellen Kommunikationsplattform wird dabei ein elektronisches Gerät oder ein auf einem Server im Internet ausgeführter Dienst verstanden, der eine Kommunikation zwischen dem Endgerät des Users und dem Zielgerät ermöglicht. Im einfachsten Fall ist die universelle Kommunikationsplattform als ein Router eines WLAN-Netzwerks ausgeführt. Die Anmeldenachricht kann dabei in einem speziellen, vorgegebenen Format oder als Freitext ausgeführt sein. Die Anmeldenachricht kann insbesondere als ein Text ausgeführt sein. Es ist aber auch möglich, dass die Anmeldenachricht zumindest zum Teil aus einer Sprachnachricht besteht und/oder Bilder enthält, beispielsweise das Bild eines WLAN-Routers mit aufgedrucktem Zugangscode.

Insbesondere benutzt der User für die Anmeldenachricht einen Kommunikationskanal, über den der User auch mit anderen Usern kommunizieren kann, also beispielsweise über einen so genannten Kurznachrichtendienst, wie beispielsweise SMS, Twitter ^{®}, WhatsApp ^{®} oder E-Mail oder über Nachrichten in einem sozialen Netzwerk wie Facebook ^{®} oder eine spezielle, besonders gesicherte Messenger oder Chat App. Es ist auch denkbar, dass die Kommunikation über einen so genannten "Voice Activated Assistant" (auf Deutsch "Sprachassistent"), wie beispielsweise Siri^{®}, Alexa^{®}, Echo^{®} oder Google Home^{®} erfolgt. Um dies zu ermöglichen, ist die universelle Kommunikationsplattform so ausgeführt, dass sie die über einen der genannten Kommunikationskanäle übermittelte Anmeldenachricht des Users empfangen und interpretieren kann. Die elektronische Anmeldenachricht kann auch aus einer Eingabe des Users auf einer von der universellen Kommunikationsplattform zur Verfügung gestellten Internetseite ausgeführt sein, die der User auf dem Endgerät geöffnet hat. Die Empfangsadresse der universellen Kommunikationsplattform ist in diesem Fall die Adresse der genannten Internetseite.

Die elektronische Anmeldenachricht enthält Informationen über die Identität des Zielgeräts und eine Anmeldemöglichkeit zum genannten Netzwerk. Die Information über die Identität des Zielgeräts kann beispielsweise eine Seriennummer und optional den Hersteller des Zielgeräts beinhalten. Auf dem Zielgerät kann beispielsweise ein QR-Code angebracht sein, der die Information über die Identität des Zielgeräts enthält und der über eine Kamera des Endgeräts des Users sehr einfach eingelesen werden kann. Die Information über die Identität des Zielgeräts kann beispielsweise auch in schriftlichen Unterlagen, beispielsweise einem Garantieschein, enthalten sein.

Bei einem QR-Code handelt es sich um einen zweidimensionalen Code, der Informationen, insbesondere in Form von Text enthält. Ein QR-Code besteht aus einer quadratischen Matrix aus schwarzen und weißen Quadraten, die die kodierten Daten binär darstellen. Eine spezielle Markierung in drei der vier Ecken des Quadrats gibt die Orientierung des QR-Codes vor. Es sind eine Vielzahl von so genannten Apps für mobile Endgeräte verfügbar, mittels welchen QR-Codes über eine Kamera eingelesen werden können. Es ist auch denkbar, dass keine spezielle App zum Einlesen von QR-Codes verwendet werden muss, sondern die "normale" Kamera App so ausgeführt ist, dass sie QR-Codes automatisch erkennen, auslesen und umsetzen kann.

Die Information über eine Anmeldemöglichkeit zum Netzwerk beinhält ein Passwort und optional den Namen des als WLAN-Netzwerks ausgeführten Netzwerks beinhalten.

Zum Zeitpunkt des Sendens der elektronischen Anmeldenachricht besteht keine Kommunikationsverbindung zwischen dem Endgerät und dem Zielgerät. Eine Kommunikationsverbindung besteht insbesondere erst, wenn das Zielgerät im Netzwerk angemeldet ist. Das Endgerät wird damit nicht vom Zielgerät genutzt, um die Anmeldenachricht zu verschicken, sondern das Senden der Anmeldenachricht wird vom User am Endgerät veranlasst und gestartet. Das Einlesen eines auf dem Zielgerät angebrachten QR-Codes ist dabei nicht als eine Kommunikationsverbindung anzusehen, da zwar Informationen vom Zielgerät zum Endgerät fließen, eine Informationsübermittlung vom Endgerät zum Zielgerät aber nicht möglich ist. Damit ist vor dem Senden der elektronischen Anmeldenachricht keine elektronische Kommunikation mit dem Zielgerät notwendig. Eine derartige elektronische Kommunikation müsste auch auf irgendeine Weise aufgebaut werden. Dies würde zusätzlichen Aufwand bedeuten, insbesondere wenn eine verschlüsselte und damit sichere Verbindung mit dem Zielgerät aufgebaut werden soll.

Die elektronische Anmeldenachricht wird insbesondere verschlüsselt vom Endgerät des Users an die universelle Kommunikationsplattform übertragen. Dabei sind verschiedene Verschlüsselungsmethoden, beispielsweise eine so genannte AES-Verschlüsselung (Advanced Encryption Standard) möglich.

Die universelle Kommunikationsplattform interpretiert zunächst die eingegangene Anmeldenachricht. Dazu durchsucht sie beispielsweise die Anmeldenachricht nach bestimmten Schlüsselwörtern wie "Anmelden" oder "Onboarding". Wenn sie eines dieser Schlüsselworte erkannt hat, extrahiert sie die genannten Informationen über die Identität des Zielgeräts und die Anmeldemöglichkeit zum genannten Netzwerk. Dazu kann sie beispielsweise ebenfalls nach Schlüsselwörtern wie "Seriennummer" oder "Passwort" suchen und die genannten Informationen aus der Anmeldenachricht extrahieren. Für die Interpretation der Anmeldenachricht kann die universelle Kommunikationsplattform auch auf eine so genannte Wissensdatenbank zugreifen. Unter einer Wissensdatenbank soll hier insbesondere eine semantische Datenbank oder eine so genannte Natural Language Processing Library verstanden werden. Derartige Wissensdatenbanken werden von Anbietern im Internet zur Verfügung gestellt, deren Dienste man beispielsweise gegen eine Nutzungsgebühr in Anspruch nehmen kann. Beispiele für so eine Wissensdatenbank sind "Watson" von IBM^{®} und "Dialogflow" von Google^{®}.

Wenn die Anmeldenachricht vom User über eine von der universellen Kommunikationsplattform zur Verfügung gestellte Internetseite eingegeben wird, werden die Informationen in vorgegebene Felder eingegeben, so dass sie sehr einfach extrahiert werden können.

Nach dem Extrahieren der genannten Informationen aus der Anmeldenachricht erzeugt die universelle Kommunikationsplattform eine Anmeldeinformationsnachricht und integriert die Informationen über die Identität des Zielgeräts und die Anmeldemöglichkeit zum genannten Netzwerk in die Anmeldeinformationsnachricht. Die Informationen sind in einem festgelegten Format und einer festgelegten Syntax in der Anmeldeinformationsnachricht enthalten.

Die universelle Kommunikationsplattform sendet die genannte Anmeldeinformationsnachricht an das Endgerät des Users. Die Anmeldeinformationsnachricht wird insbesondere ebenfalls verschlüsselt an das Endgerät gesendet. Dazu kann die universelle Kommunikationsplattform beispielsweise den selben Kommunikationskanal verwenden, über den der User die Anmeldenachricht gesendet hat. Es ist aber auch möglich, dass ein anderer Kommunikationskanal verwendet wird.

Das Endgerät des Users sendet die Anmeldeinformationsnachricht sendet die empfangene Anmeldeinformationsnachricht in Form von moduliertem Licht aus. Unter "moduliertem Licht" soll dabei Licht mit wechselnden Eigenschaften verstanden werden. Über den genannten Wechsel einer Eigenschaft können Informationen oder Daten übertragen werden. Insbesondere wird die Intensität bzw. Helligkeit des Lichts gezielt verändert, so dass das Licht "flackert". Dieses Flackern kann so ausgeführt werden, dass es vom menschlichen Auge nicht wahrgenommen werden kann. Es ist ebenfalls denkbar, dass die Farbe des Lichts geändert wird und die Informationen durch diese Farbmodulation übertragen werden.

Das Endgerät nutzt zum Aussenden der Informationen insbesondere eine eingebaute Blitzvorrichtung, welche ansonsten beim Fotografieren zur besseren Ausleuchtung oder auch als Taschenlampe genutzt wird. Die Blitzvorrichtung verfügt insbesondere über eine LED, welche moduliertes Licht erzeugen kann. Das Aussenden kann auch über eine gegenüber dem Endgerät separate Aussendevorrichtung, insbesondere eine oder mehrere LEDs erfolgen, welche vom Endgerät entsprechend angesteuert wird.

Das Aussenden erfolgt insbesondere in der Nähe des Zielgeräts, damit ein lichtempfindlicher Sensor des Zielgeräts des Zielgeräts, insbesondere in Form eines Fotosensors das ausgesandte modulierte Licht, also den Inhalt der Anmeldeinformationsnachricht erfassen kann. Das Zielgerät extrahiert die Informationen über die Anmeldemöglichkeit zum genannten Netzwerk, also beispielsweise das Passwort für das als geschütztes WLAN-Netzwerk ausgeführte Netzwerk. Die für die Extraktion erforderlichen Algorithmen sind im Zielgerät einprogrammiert. Es ist auch möglich, dass die Algorithmen nach der Verbindung mit dem Internet aktualisiert werden. Das Zielgerät ist insbesondere so ausgeführt, dass es den Inhalt der empfangenen Anmeldeinformationsnachricht nur dann komplett extrahiert bzw. auswertet, wenn es erkennt, dass die Informationen für das Zielgerät gedacht sind. Dazu kann es zunächst die Information über die Identität des Zielgeräts extrahieren. Wenn die Identität des Zielgeräts in der Anmeldeinformationsnachricht ihrer eigenen Identität entspricht, dann extrahiert es auch die Information über die Anmeldemöglichkeit am Netzwerk.

Abschließend meldet sich das Zielgerät mit den Informationen über die Anmeldemöglichkeit, also beispielsweise mit der Information über den Namen des WLAN-Netzwerks und das Passwort, am Netzwerk an. Das Zielgerät ist damit am Netzwerk angemeldet und kann über das Netzwerk Daten bzw. Informationen senden und Befehle empfangen. Der User kann damit über ein Endgerät direkt oder über die individuelle Kommunikationsplattform kommunizieren.

Unter einer Kommunikation zwischen einem User mit einem Endgerät und einem Zielgerät soll hier das Austauschen von digitalen Informationen verstanden werden. Beispielsweise kann der User einen Befehl an das Zielgerät senden, beispielsweise eine Zieltemperatur einer Klimaanlage einstellen. Es ist auch möglich, dass der User Einstellungen an einem Zielgerät vornimmt, beispielsweise dass sich eine Klimaanlage von Montag bis Freitag um 8:00 Uhr morgens einschaltet. Das Zielgerät kann auf der anderen Seite beispielsweise Messwerte, beispielsweise die aktuelle Temperatur, Statusinformationen, wie beispielsweise ob es gerade aktiv ist oder auch Quittierungen von Befehlen an das Endgerät senden. Diese ganze Kommunikation wird auch unter dem Begriff "Internet of Things" (deutsch: "Internet der Dinge") oder abgekürzt loT zusammengefasst.

Die Zielgeräte können beispielsweise als Klimaanlagen, Wetterstationen, Überwachungskameras, Autos, Heizungssteuerungen, Kühlschränke, Steuergeräte für Rollläden, Bearbeitungsmaschinen, Zugangssysteme oder so genannte Wearables ausgeführt sein. Damit können die Zielgeräte beispielsweise Bausteine von so genannten Smart Home, Connected Car oder allgemeiner Internet of Things Anwendungen sein. Grundsätzlich sind alle elektrischen, elektronischen oder photonischen Geräte als Zielgeräte denkbar, die über eine Möglichkeit zur Anmeldung an ein Netzwerk verfügen.

In Ausgestaltung der Erfindung prüft die universelle Kommunikationsplattform, ob sich das Zielgerät am genannten Netzwerk anmelden darf und sendet die genannte Anmeldeinformationsnachricht nur bei einem positiven Prüfergebnis an das Endgerät des Users. Damit kann sichergestellt werden, dass keine sich keine "unerwünschten" Zielgeräte am Netzwerk anmelden und insbesondere, dass nur User ein Zielgerät anmelden, die dazu auch berechtigt sind.

Die universelle Kommunikationsplattform prüft beispielsweise, ob das Zielgerät bereits von einem anderen User an einem Netzwerk angemeldet wurde. Falls dies der Fall ist und dieser User das Zielgerät nicht über eine geeignete Freigabenachricht freigegeben hat, dann darf sich das Zielgerät nicht am Netzwerk anmelden. In diesem Fall sendet die universelle Kommunikationsplattform insbesondere eine entsprechende Nachricht an den User. Es ist ebenfalls möglich, dass in der universellen Kommunikationsplattform eine Liste mit allen Zielgeräten, die sich an einem Netzwerk und/oder an einem speziellen Netzwerk anmelden dürfen, abgelegt ist. In diesem Fall prüft die universelle Kommunikationsplattform nach dem Empfang einer Anmeldenachricht, ob das entsprechende Zielgerät in der genannten Liste enthalten ist. Ist dies der Fall, wird die genannte Anmeldeinformationsnachricht erzeugt und an den User gesendet. Ist dies nicht der Fall, wird eine Nachricht, dass sich das Zielgerät nicht am Netzwerk anmelden darf, an den User gesendet.

In Ausgestaltung der Erfindung tauscht die universelle Kommunikationsplattform für die genannte Prüfung, ob sich das Zielgerät am genannten Netzwerk anmelden darf, mit wenigstens einer spezifischen Kommunikationsplattform Informationen aus. Damit kann die Prüfung sehr flexibel ausgeführt werden.

Unter einer spezifischen Kommunikationsplattform soll hier eine Kommunikationsplattform für eine vorgegebene Auswahl von Zielgeräten verstanden werden. Eine spezifische Kommunikationsplattform ist beispielsweise für Zielgeräte eines bestimmten Herstellers vorgesehen. Um eine derartige spezifische Kommunikationsplattform nutzen zu können, ist meist ein spezielles Programm auf einem Endgerät eines Users notwendig. Die Informationen zwischen Zielgerät und Endgerät werden dann in einem speziellen Protokoll übertragen, das von dem verwendeten Programm unterstützt wird. Die bei verschiedenen spezifischen Kommunikationsplattformen verwendeten Protokolle unterscheiden sich sehr stark. Ein User, der mit Zielgeräten verschiedener Hersteller Informationen austauschen möchte, muss daher verschiedene Endgeräte und/oder verschiedene Programme mit verschiedenen Protokollen benutzen. Die Kommunikation mit Zielgeräten verschiedener Hersteller kann stark vereinfacht werden, wenn der User mit seinem Endgerät mit einer universellen Kommunikationsplattform kommuniziert, welche dann die Informationen mit dem entsprechenden Protokoll an die zugehörige spezifische Kommunikationsplattform weiterleitet. Derartige Verfahren sind beispielsweise in der DE 102016014479 A1 beschrieben.

In der vorliegenden Ausgestaltung der Erfindung sind beispielsweise in einer oder mehreren spezifischen Kommunikationsplattformen Listen mit Zielgeräten abgelegt, die sich an einem Netzwerk anmelden dürfen. Sobald die universelle Kommunikationsplattform eine Anmeldenachricht empfängt, fragt sie bei wenigstens einer spezifischen Kommunikationsplattform an, ob sich das entsprechende Zielgerät am Netzwerk anmelden darf. Bei einer positiven Rückmeldung erzeugt sie die Anmeldeinformationsnachricht und sendet es an den User; bei einer negativen Rückmeldung sendet sie eine entsprechende Nachricht an den User.

In Ausgestaltung der Erfindung kann die universelle Kommunikationsplattform über mehr als eine Empfangsadresse elektronische Anmeldenachrichten empfangen, wobei insbesondere jeder Empfangsadresse eine spezifische Kommunikationsplattform zugeordnet ist. Damit kann die universelle Kommunikationsplattform sehr einfach feststellen, welche spezifische Kommunikationsplattform für die Prüfung der Anmeldeberechtigung angefragt werden muss.

Wie oben ausgeführt ist eine spezifische Kommunikationsplattform insbesondere einem Hersteller von Zielgeräten zugeordnet. Damit kann jeder Hersteller, der mit der universellen Kommunikationsplattform zusammenarbeitet, seinen Kunden und damit Usern der Zielgeräte eine eigene Empfangsadresse anbieten. Die Anmeldenachrichten, die an die verschiedenen Empfangsadressen gesandt werden, werden alle von der universellen Kommunikationsplattform empfangen und können über die Empfangsadresse einer spezifischen Kommunikationsplattform und damit einem speziellen Hersteller zugeordnet werden. Es ist auch möglich, dass einer spezifischen Kommunikationsplattform bzw. einem Hersteller mehrere Empfangsadressen zugeordnet sind oder dass eine Empfangsadresse mehreren spezifischen Kommunikationsplattformen bzw. Herstellern zugeordnet ist.

In Ausgestaltung der Erfindung sendet das Zielgerät nach erfolgreicher Anmeldung am Netzwerk eine Anmeldebestätigung an die universelle Kommunikationsplattform und/oder die spezifische Kommunikationsplattform und nach Empfangen der Anmeldebestätigung wird das Zielgerät dem User zugeordnet. Damit kann einfach sichergestellt werden, dass nur der berechtigte User mit dem Zielgerät kommunizieren kann.

Bei Nutzung einer Kommunikation zwischen Endgerät und Zielgerät über eine universelle oder eine spezifische Kommunikationsplattform ist es nicht erwünscht, dass jeder beliebige User an jedes beliebige Zielgerät eine elektronische Nachricht, beispielsweise in Form eines Befehls senden kann. Es wäre aber sehr umständlich, wenn sich ein User vor oder bei jedem Senden einer elektronischen Nachricht an ein Zielgerät autorisieren, beispielsweise eine Userkennung und ein Kennwort eingeben müsste. Durch die beschriebene Zuordnung des Zielgeräts zum User wird der unberechtigte Zugriff von anderen Usern auf das Zielgerät verhindert.

Das Zielgerät sendet die Anmeldebestätigung insbesondere über das Netzwerk, an dem es sich angemeldet hat, an die universelle Kommunikationsplattform und/oder die spezifische Kommunikationsplattform. Der User wird insbesondere über seine User-Kontaktadresse, von der aus er die Anmeldenachricht an die universelle Kommunikationsplattform gesendet hat, identifiziert. Dazu ist in der universellen oder einer spezifischen Kommunikationsplattform insbesondere eine Liste mit allen berechtigten Usern mit ihren verschiedenen User-Kontaktadressen abgelegt.

Unter einer User-Kontaktadresse soll hier ganz allgemein ein Kenner verstanden werden, mit dessen Nutzung eine elektronische Nachricht über einen Kommunikationskanal an den User adressiert und geschickt werden kann. Bei der User-Kontaktadresse kann es sich beispielsweise um eine Mobilfunknummer zur Adressierung einer SMS oder einer WhatsApp^{®} Nachricht, einer Facebook^{®} oder Twitter^{®} Kennung oder eine E-Mail-Adresse handeln. Darüber hinaus sind weitere User-Kontaktadressen denkbar. Es sollte lediglich sichergestellt sein, dass beim Versenden einer elektronischen Nachricht, der Absender der Nachricht über die angegebene User-Kontaktadresse identifiziert werden kann.

Unter einer Zuordnung des Zielgeräts zu einem User soll in diesem Zusammenhang verstanden werden, dass das Zielgerät mit dem User so verknüpft wird, dass er insbesondere über ein Endgerät mit dem Zielgerät kommunizieren und damit Informationen austauschen kann, ohne sich bei jedem Informationsaustausch erneut autorisieren zu müssen.

Es ist insbesondere möglich, dass ein User, dem das Zielgerät zugeordnet ist, einem anderen User nur für eine bestimmte Zeitspanne Zugriff auf ein bestimmtes Zielgerät gibt. Ist der andere User beispielsweise ein Gast in einem Hotel, so kann ihm nur für die Zeitdauer seines Aufenthalts Zugriff auf ein Zielgerät im Hotelzimmer gegeben werden. Nach Ende des Aufenthalts erlischt automatisch die Zugriffsberechtigung, ohne dass weitere Schritte unternommen werden müssten.

Um die Zuordnung eines Zielgeräts ändern zu können, kann der User insbesondere die Zuordnung eines Zielgeräts zu ihm aufheben.

In Ausgestaltung der Erfindung wird der lichtempfindliche Sensor des Zielgeräts nach erfolgreicher Anmeldung am Netzwerk automatisch deaktiviert. Damit kann eine missbräuchliche Verwendung des lichtempfindlichen Sensors, beispielsweise ein unerlaubtes Empfangen von über moduliertem Licht versandte Informationen durch einen unberechtigten User verhindert werden. Der User, dem das Zielgerät zugeordnet ist, kann den lichtempfindlichen Sensor durch Senden einer entsprechenden Anweisung an das Zielgerät wieder aktivieren. Das Zielgerät kann insbesondere zusätzlich eine Möglichkeit zum Aktivieren bzw. Deaktivieren des lichtempfindlichen Sensors, beispielsweise einen Schalter aufweisen.

In Ausgestaltung der Erfindung erzeugt das Zielgerät bei erfolgloser Anmeldung am Netzwerk ein Fehler-File und gibt dieses aus. Das Fehler-File kann beispielsweise über eine LED in Form von moduliertem Licht ausgegeben werden. Es ist auch möglich, dass das Fehler-File als ein Audiofile ausgeführt und über einen im Zielgerät eingebauten oder über ein Kabel angeschlossenen Lautsprecher ausgegeben wird. Das Fehler-File wird von einem Endgerät des Users über einen lichtempfindlichen Sensor oder ein Mikrofon empfangen und an die universelle Kommunikationsplattform gesendet. Für das Senden kann entweder dieselbe Empfängeradresse wie für die Anmeldenachricht oder eine spezielle Empfängeradresse für Fehler-Files verwendet werden. Die universelle Kommunikationsplattform wertet das Fehler-File aus und sendet eine entsprechende Rückmeldung an den User zurück. Die universelle Kommunikationsplattform kann auch Informationen über den Fehler an den Hersteller des Zielgeräts senden, der diese auswerten kann. Die Rückmeldung enthält insbesondere Informationen darüber, wie eine erfolgreiche Anmeldung am Netzwerk durchgeführt werden kann.

Mit dieser Ausgestaltung der Erfindung kann der User auch für Zielgeräte ohne Anzeigemöglichkeiten, wie beispielsweise ein Display Hilfestellung für die Anmeldung an einem Netzwerk bekommen.

Die universelle Kommunikationsplattform extrahiert zunächst den Inhalt des Fehler-Files, also die Fehlermeldung des Zielgeräts. Für die Generierung der Rückmeldung ist insbesondere eine Tabelle mit Fehlermeldungen und zugehörigen Rückmeldungen in der universellen Kommunikationsplattform abgelegt. Die Rückmeldung an den User kann beispielsweise aus einer Textnachricht, einem Audiofile oder einem Link auf eine Internetseite mit weiteren Informationen bestehen.

In Ausgestaltung der Erfindung tauscht die universelle Kommunikationsplattform für die Generierung der genannten Rückmeldung mit wenigstens einer spezifischen Kommunikationsplattform Informationen aus. Damit können die Rückmeldungen an den User sehr flexibel generiert werden.

In Ausgestaltung der Erfindung wandelt die universelle Kommunikationsplattform das Fehler-File in ein Fehlerprotokoll um und sendet das Fehlerprotokoll an die wenigstens eine spezifische Kommunikationsplattform. Damit muss nur die universelle Kommunikationsplattform und keine der speziellen Kommunikationsplattformen die Möglichkeit zur Extraktion von Informationen aus einem Fehler-File aufweisen.

Unter einem Fehlerprotokoll soll hier ein maschinenlesbares Protokoll, beispielsweise in ACSII-Format verstanden werden, das die spezifische Kommunikationsplattform einfach auswerten kann. Die universelle Kommunikationsplattform kann dabei nur eine Art von Fehlerprotokoll oder insbesondere eine auf die entsprechende spezifische Kommunikationsplattform angepasste Art von Fehlerprotokoll erzeugen.

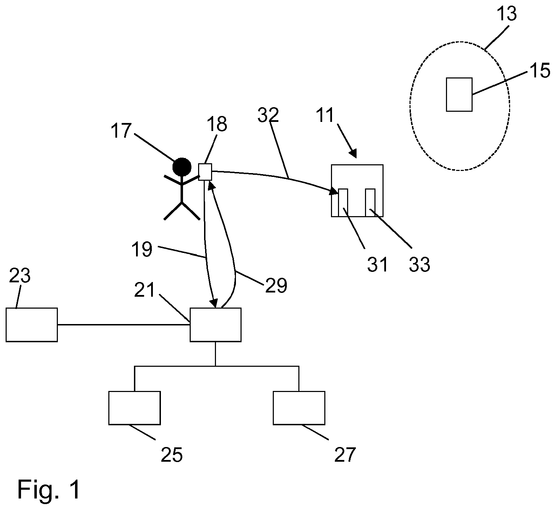

Weitere Ausgestaltungen der Erfindung gehen aus der Beschreibung und der Zeichnung hervor. Ausführungsbeispiele der Erfindung sind in der Zeichnung vereinfacht dargestellt und in der nachfolgenden Beschreibung näher erläutert. Dabei zeigt
- Fig. 1: ein Kommunikationssystem mittels welchem ein User mit einem Zielgerät kommunizieren kann.

Fig. 1 zeigt ein Zielgerät 11, das an einem Netzwerk 13 in Form eines passwortgeschützten WLAN-Netzwerks angemeldet werden soll. Das Netzwerk 13 wird von einem Router 15 gemanagt, über den auch eine Verbindung zum Internet besteht. Um sich am Netzwerk 13 anmelden zu können, muss ein korrektes Passwort angegeben werden.

Ein User 17 kennt dieses Passwort, das als eine Anmeldemöglichkeit zum Netzwerk 13 bezeichnet werden kann. Um das Zielgerät 11 am Netzwerk 13 anzumelden, sendet der User 17 über ein Endgerät 18 beispielsweise in Form eines Smartphones eine verschlüsselte elektronische Anmeldenachricht (symbolisiert durch den Pfeil 19) an eine universelle Kommunikationsplattform 21. Zumindest zu diesem Zeitpunkt besteht keine Kommunikationsverbindung zwischen dem Endgerät 18 und dem Zielgerät 11. Die universelle Kommunikationsplattform 21 ist ein Dienst, der auf einem oder mehreren Servern im Internet, also in der so genannten Cloud ausgeführt wird. Der User 17 sendet als Anmeldenachricht beispielsweise eine WhatsApp^{®}-Nachricht an eine Empfangsadresse der universellen Kommunikationsplattform 21. Die Empfangsadresse und zusätzlich eine Seriennummer des Zielgeräts 11 sind in schriftlichen Unterlagen des Zielgeräts 11 enthalten. Die Empfangsadresse und/oder die Seriennummer können auch in einem auf dem Zielgerät 11 aufgebrachten QR-Code enthalten sein. Die Seriennummer kann dabei als eine Information über die Identität des Zielgeräts 11 angesehen werden. Die Anmeldenachricht an die universelle Kommunikationsplattform 21 enthält neben der Seriennummer des Zielgeräts das Passwort für das Netzwerk 13 und ein Schlüsselwort, das die elektronische Nachricht als eine Anmeldenachricht kennzeichnet.

Die elektronische Anmeldenachricht kann beispielsweise folgenden Inhalt haben: "Anmeldung Seriennummer: 123 Passwort ABC", wobei "Anmeldung" das genannte Schlüsselwort, "123" die Seriennummer und "ABC" das Passwort sind. Die universelle Kommunikationsplattform 21 kann auch eine oder mehrere spezielle Empfangsadressen aufweisen, die nur für Anmeldenachrichten verwendet werden. In diesem Fall ist die Verwendung eines Schlüsselworts nicht notwendig.

Die universelle Kommunikationsplattform 21 interpretiert zunächst die eingegangene Anmeldenachricht. Dazu durchsucht sie die Anmeldenachricht nach bestimmten Schlüsselwörtern wie "Anmelden" oder "Onboarding". Wenn sie eines dieser Schlüsselworte erkannt hat, extrahiert sie die genannten Informationen über die Identität des Zielgeräts 11 und die Anmeldemöglichkeit zum Netzwerk 13. Dazu sucht sie nach Schlüsselwörtern wie "Seriennummer" oder "Passwort" und extrahiert die genannten Informationen aus der Anmeldenachricht. Für die Interpretation der Anmeldenachricht kann die universelle Kommunikationsplattform 21 auch über das Internet auf eine Wissensdatenbank 23 zugreifen.

Es ist auch möglich, dass die elektronische Anmeldenachricht das Passwort nicht enthält und der User als Reaktion auf die Anmeldenachricht auf eine spezielle, insbesondere gesicherte Internetseite geleitet wird, auf der er das Passwort eingeben kann.

Wenn die universelle Kommunikationsplattform 21 die Seriennummer des Zielgeräts 11 und das Passwort zum Netzwerk 13 extrahiert hat, prüft die universelle Kommunikationsplattform 21 insbesondere, ob sich das Zielgerät 11 am genannten Netzwerk 13 anmelden darf. Dazu tauscht die universelle Kommunikationsplattform 21 mit einer spezifischen Kommunikationsplattform 25 Informationen aus. Die universelle Kommunikationsplattform 21 steht auch mit einer weiteren spezifischen Kommunikationsplattform 27 in Kommunikationsverbindung. Da der User 17 die Anmeldenachricht die der spezifischen Kommunikationsplattform 25 zugeordneten Empfängeradresse der individuellen Kommunikationsplattform 21 gesendet hat, weiß die universelle Kommunikationsplattform 21, dass sie im vorliegenden Beispiel die spezifische Kommunikationsplattform 25 anfragen muss. Neben der der spezifischen Kommunikationsplattform 25 zugeordneten Empfängeradresse kann die universelle Kommunikationsplattform 21 auch über eine weitere, der spezifischen Kommunikationsplattform 27 zugeordneten Empfängeradresse Anmeldenachrichten empfangen.

Die spezifische Kommunikationsplattform 25 wird vom Hersteller des Zielgeräts 11 betrieben. In der spezifischen Kommunikationsplattform 25 ist eine Tabelle mit allen Seriennummern von Zielgeräten abgespeichert, die sich an ein Netzwerk anmelden können. Zusätzlich ist der genannten Tabelle die Information abgespeichert, ob ein Zielgerät bereits einem User und ggf. welchem User zugeordnet ist. Die universelle Kommunikationsplattform 21 sendet die Seriennummer des Zielgeräts an die spezifische Kommunikationsplattform 25. Sofern die Seriennummer des Zielgeräts 11 in der genannten Tabelle enthalten ist und es noch keinem anderen User zugeordnet ist, meldet die spezifische Kommunikationsplattform 25 der universellen Kommunikationsplattform zurück, dass sich das Zielgerät 11 an das Netzwerk 13 anmelden darf.

Wenn die universelle Kommunikationsplattform 21 eine positive Rückmeldung von der spezifischen Kommunikationsplattform 25 erhält, das Zielgerät 11 sich also am Netzwerk 13 anmelden darf, erzeugt die universelle Kommunikationsplattform 21 eine Anmeldeinformationsnachricht und integriert die Informationen über die Identität des Zielgeräts in Form der Seriennummer des Zielgeräts 11 und die Anmeldemöglichkeit zum Netzwerk 13 in Form des Passworts in die Anmeldeinformationsnachricht. Die Erzeugung der Anmeldeinformationsnachricht kann dabei entweder von der universellen Kommunikationsplattform 21 selbst oder von einem externen, über das Internet angesprochenen Dienst erfolgen.

Die universelle Kommunikationsplattform 21 sendet die genannte Anmeldeinformationsnachricht verschlüsselt an das Endgerät 18 des Users 17 (symbolisiert durch Pfeil 29). Die universelle Kommunikationsplattform 21 verwendet dazu denselben Kommunikationskanal, also eine WhatsApp^{®} -Nachricht, über den der User 17 die Anmeldenachricht gesendet hat.

Der User 17 sendet die empfangene Anmeldeinformationsnachricht über eine nicht dargestellte LED des Endgeräts 18 in Form von moduliertem Licht so aus, dass das Zielgerät 11 die abgespielten Töne, also den Inhalt der Anmeldeinformationsnachricht über einen eingebauten lichtempfindlichen Sensor 31 in Form einer Fotodiode erfassen kann (symbolisiert durch Pfeil 32). Die genannte LED des Endgeräts 18 bildet oder ist zumindest ein Teil einer Blitzvorrichtung des Endgeräts 18, welche ansonsten beim Fotografieren zur besseren Ausleuchtung oder auch als Taschenlampe genutzt wird. Das Zielgerät 11 extrahiert aus der Anmeldeinformationsnachricht zunächst die enthaltene Seriennummer. Wenn die extrahierte Seriennummer mit seiner eigenen Seriennummer übereinstimmt, dann extrahiert das Zielgerät 11 zusätzlich das ebenfalls enthaltene Passwort des Netzwerks 13. Die für die Extraktion erforderlichen Algorithmen sind im Zielgerät 11 einprogrammiert.

Abschließend meldet sich das Zielgerät 11 mit dem extrahierten Passwort am Netzwerk 13 an. Das Zielgerät 11 ist damit am Netzwerk 13 angemeldet und kann über das Netzwerk 13 Daten bzw. Informationen senden und Befehle empfangen. Da das Netzwerk 13 auch mit dem Internet verbunden ist, kann das Zielgerät 11 auch über das Internet Informationen senden und Befehle empfangen.

Nach erfolgreicher Anmeldung am Netzwerk 13 sendet das Zielgerät 11 eine Anmeldebestätigung an die universelle Kommunikationsplattform 21. Nach Empfangen der Anmeldebestätigung durch die universelle Kommunikationsplattform 21 wird das Zielgerät 11 dem User 17 zugeordnet. Es ist auch möglich, dass das Zielgerät 11 nach erfolgreicher Anmeldung am Netzwerk 13 zunächst eine elektronische Nachricht an die spezifische Kommunikationsplattform 25 sendet und diese dann eine Anmeldebestätigung des Zielgeräts 11 an die universelle Kommunikationsplattform 21 schickt.

Nach erfolgreicher Anmeldung des Zielgeräts 11 am Netzwerk 14 deaktiviert das Zielgerät 11 automatisch seinen lichtempfindlichen Sensor 31. Der User 17 kann den lichtempfindlichen Sensor 31 durch Senden einer entsprechenden Anweisung an das Zielgerät 11 oder über einen nicht dargestellten Schalter am Zielgerät 11 wieder aktivieren. Es ist ebenfalls möglich, dass das Verhalten des lichtempfindlichen Sensors 31 vom User 17 parametriert werden kann. Die Deaktivierung des lichtempfindlichen Sensors 31 muss nicht durchgeführt werden, der lichtempfindliche Sensor 31 kann auch aktiviert bleiben.

Falls die Anmeldung des Zielgeräts 11 am Netzwerk 13 fehlschlägt, erzeugt das Zielgerät 11 ein Fehler-File in Form eines Fehler-Audiofiles und gibt dieses über einen eingebauten Lautsprecher 33 aus. Das Fehler-Audiofile wird vom Endgerät 18 des Users 17 empfangen und an die universelle Kommunikationsplattform 21 gesendet. Die universelle Kommunikationsplattform 21 extrahiert zunächst den Inhalt des Fehler-Audiofiles, also die Fehlermeldung des Zielgeräts 11 und erzeugt daraus ein Fehlerprotokoll, beispielsweise in Form eines ASCII-Files, das die Fehlermeldung des Zielgeräts 11 enthält. Die universelle Kommunikationsplattform 21 sendet das Fehlerprotokoll an die spezifische Kommunikationsplattform 25. In der spezifischen Kommunikationsplattform 25 ist eine Tabelle abgelegt, in der jeder möglichen Fehlermeldung eine passende Rückmeldung an den User 17, in Form von Hinweisen zur Fehlerbehebung zugeordnet sind. Die spezifische Installationsplattform 25 sendet die passende Rückmeldung an die universelle Installationsplattform 21, welche sie dann in Form einer elektronischen Nachricht an das Endgerät 18 des Users 17 sendet. Statt das Fehler-File über einen Lautsprecher auszugeben, kann das Zielgerät das Fehler-File über eine LED in Form von moduliertem Licht ausgegeben. In diesem Fall empfängt das Endgerät das Fehler-File mit einem lichtempfindlichen Sensor, beispielsweise einer eingebauten Kamera. Die universelle Kommunikationsplattform 21 kann das Fehlerprotokoll zusätzlich auch direkt oder über die spezifische Kommunikationsplattform 25 an den Hersteller des Zielgeräts 11 senden. Dieser kann die Fehlerprotokolle verschiedener Endgeräte auswerten und daraus notwendige Verbesserungen ableiten.

Wenn die Anfrage der universellen Kommunikationsplattform 21 an die spezifische Kommunikationsplattform 25, ob sich das Zielgerät 11 an einem Netzwerk anmelden darf, ein negatives Ergebnis liefert, das Zielgerät 11 sich also nicht am Netzwerk 13 anmelden darf, so sendet die universelle Kommunikationsplattform 21 eine entsprechende elektronische Nachricht an das Endgerät 18 des Users 17.

## Patentansprüche

1. Verfahren zum Anmelden eines Zielgeräts an ein Netzwerk mit folgenden Schritten:
- Senden einer elektronischen Anmeldenachricht von einem Endgerät (18) an eine universelle Kommunikationsplattform (21) durch einen User (17), wobei die Anmeldenachricht Informationen über eine Identität des Zielgeräts (11) und eine Anmeldemöglichkeit zum genannten Netzwerk (13) enthält und zum Zeitpunkt des Sendens der elektronischen Anmeldenachricht keine Kommunikationsverbindung zwischen dem Endgerät (18) und dem Zielgerät (11) besteht,
- Integrieren der genannten Informationen der Anmeldenachricht in eine Anmeldeinformationsnachricht durch die universelle Kommunikationsplattform (21),
- Senden der genannten Anmeldeinformationsnachricht von der universellen Kommunikationsplattform (21) an das Endgerät (18) des Users (17),
- Aussenden der in der Anmeldeinformationsnachricht enthaltenen Informationen in Form von moduliertem Licht durch das genannte Endgerät (18) des Users (17),
- Erfassen der genannten Informationen durch einen lichtempfindlichen Sensor (31) des Zielgeräts (11) und Extrahieren der Informationen über die Anmeldemöglichkeit zum genannten Netzwerk (13) in Form eines Passworts und
- Anmelden am Netzwerk (13) unter Nutzung der genannten Anmeldemöglichkeit in Form eines Passworts durch das Zielgerät (11).

2. Verfahren nach Anspruch 1,
**dadurch gekennzeichnet, dass**
das Endgerät die der in der Anmeldeinformationsnachricht enthaltenen Informationen mittels einer Blitzvorrichtung aussendet.

3. Verfahren nach Anspruch 1 oder 2,
**dadurch gekennzeichnet, dass**
die universelle Kommunikationsplattform (21) prüft, ob sich das Zielgerät (11) am genannten Netzwerk (13) anmelden darf und die genannte Anmeldeinformationsnachricht nur bei einem positiven Prüfergebnis an das Endgerät (18) des Users (17) sendet.

4. Verfahren nach Anspruch 1, 2 oder 3,
**dadurch gekennzeichnet, dass**
die universelle Kommunikationsplattform (21) für die genannte Prüfung, ob sich das Zielgerät (11) am genannten Netzwerk (13) anmelden darf, mit wenigstens einer spezifischen Kommunikationsplattform (25, 27) Informationen austauscht.

5. Verfahren nach einem der Ansprüche 1 bis 4,
**dadurch gekennzeichnet, dass**
die universelle Kommunikationsplattform (21) über mehr als eine Empfangsadresse elektronische Anmeldenachrichten empfangen kann, wobei insbesondere jeder Empfangsadresse eine spezifische Kommunikationsplattform (25, 27) zugeordnet ist.

6. Verfahren nach einem der Ansprüche 1 bis 5,
**dadurch gekennzeichnet, dass**
das Zielgerät (11) nach erfolgreicher Anmeldung am Netzwerk (13) eine Anmeldebestätigung an die universelle Kommunikationsplattform (21) und/oder die spezifische Kommunikationsplattform (25, 27) sendet und nach Empfangen der Anmeldebestätigung das Zielgerät (11) dem User (17) zugeordnet wird.

7. Verfahren nach einem der Ansprüche 1 bis 6,
**dadurch gekennzeichnet, dass**
der lichtempfindliche Sensor (31) des Zielgeräts (11) nach erfolgreicher Anmeldung am Netzwerk (13) automatisch deaktiviert wird.

8. Verfahren nach einem der Ansprüche 1 bis 7,
**dadurch gekennzeichnet, dass**
- das Zielgerät (11) bei erfolgloser Anmeldung am Netzwerk (13) ein Fehler-File erzeugt und ausgibt,
- das Fehler-File von einem Endgerät (18) des Users (17) empfangen und an die universelle Kommunikationsplattform (21) gesendet wird und
- die universelle Kommunikationsplattform (21) das Fehler-File auswertet und eine entsprechende Rückmeldung an den User (17) zurücksendet.

9. Verfahren nach Anspruch 8,
**dadurch gekennzeichnet, dass**
die universelle Kommunikationsplattform (21) für die Generierung der genannten Rückmeldung mit wenigstens einer spezifischen Kommunikationsplattform (25, 27) Informationen austauscht.

10. Verfahren nach Anspruch 9,
**dadurch gekennzeichnet, dass**
die universelle Kommunikationsplattform (21) das Fehler-File in ein Fehlerprotokoll umwandelt und das Fehlerprotokoll an die wenigstens eine spezifische Kommunikationsplattform (25, 27) sendet.

## Claims

1. A method for logging a target device onto a network, comprising the steps of:
- transmitting an electronic log-on message from a terminal device (18) to a universal communication platform (21) by a user (17), wherein the log-on message contains information about the identity of the target device (11) and a logon option to said network (13), and where at the time of transmission of the electronic logon message there is not yet any communication link between the terminal device (18) and the target device (11) active;
- integrating the above-mentioned information of the log-on message into a log-on credentials message by the universal communication platform (21);
- transmitting the aforementioned log-on credentials message from the universal communication platform (21) to the user's (17) terminal device (18);
- transmitting the information contained in the log-on credentials message in the form of modulated light by the said user's (17) terminal device (18);
- acquiring said information through a light-sensitive sensor (31) of the target device (11) and extracting the information about the option to log onto said network (13) in form of a password, and
- logging onto the network (13) using the above-mentioned logon option in form of a password through the target device (11).

2. Method according to claim 1, **characterized in that**
the terminal device transmits the information contained in the log-on credentials message by means of a flashlight device.

3. Method according to claim 1 or 2, **characterized in that**
the universal communication platform (21) checks whether the target device (11) is allowed to log onto the said network (13) and sends the said log-on credentials message to the user's terminal device (18) only if the check result is positive.

4. Method according to claim 1, 2 or 3, **characterized in that**
the universal communication platform (21) exchanges information with at least one specific communication platform (25, 27) for the said check as to whether the target device (11) is allowed to log on to the said network (13).

5. Method according to one of claims 1 to 4, **characterized in that**
the universal communication platform (21) can receive electronic log-on messages via more than one receiving address, wherein in particular a specific communication platform (25, 27) is assigned to each receiving address.

6. Method according to one of claims 1 to 5, **characterized in that**
the target device (11) sends a log-on confirmation message to the universal communication platform (21) and/or the specific communication platform (25, 27) after successful login to the network (13) and the target device (11) is assigned to the user (17) after receiving the log-on confirmation.

7. Method according to one of claims 1 to 6, **characterized in that**
the light-sensitive sensor (31) of the target device (11) is automatically deactivated after successful login to the network (13).

8. Method according to one of claims 1 to 7, **characterized in that**
- the target device (11) generates and outputs an error log file if the login to the network (13) is unsuccessful;
- the error log file is received by a terminal device (18) of the user (17) and sent to the universal communication platform (21); and
- the universal communication platform (21) evaluates the error file and sends a corresponding feedback to the user (17).

9. Procedure according to claim 8, **characterized in that**
the universal communication platform (21) exchanges information with at least one specific communication platform (25, 27) for generating said feedback.

10. Procedure according to claim 9, **characterized in that**
the universal communication platform (21) converts the error log file into an error log and sends the error log to the at least one specific communication platform (25, 27).

## Revendications

1. Procédé de connexion d'un appareil cible à un réseau, avec les étapes suivantes :
- envoi d'un message de connexion électronique d'un terminal (18) à une plateforme de communication universelle (21) par un utilisateur (17), étant donné que le message de connexion contient des informations sur une identité de l'appareil cible (11) et une possibilité de connexion au réseau (13) et qu'il n'y a au moment de l'envoi du message de connexion électronique aucune liaison de communication entre le terminal (18) et l'appareil cible (11),
- intégration des informations du message de connexion dans un message d'informations de connexion par la plateforme de communication universelle (21),
- envoi du message d'informations de connexion de la plateforme de communication universelle (21) au terminal (18) de l'utilisateur (17),
- émission des informations contenues dans le message d'informations de connexion sous forme de lumière modulée via le terminal (18) de l'utilisateur (17),
- saisie des informations par un détecteur photosensible (31) de l'appareil cible (11) et extraction des informations via la possibilité de connexion au réseau (13) sous forme d'un mot de passe et
- connexion au réseau (13) en utilisant ladite possibilité de connexion sous forme d'un mot de passe au moyen de l'appareil cible (11).

2. Procédé selon la revendication 1,
**caractérisé en ce que**
le terminal émet les informations contenues dans le message d'informations de connexion au moyen d'un dispositif de flash.

3. Procédé selon la revendication 1 ou 2,
**caractérisé en ce que**
la plateforme de communication universelle (21) vérifie si l'appareil cible (11) a le droit de se connecter au réseau (13) et n'envoie le message d'informations de connexion au terminal (18) de l'utilisateur (17) qu'en cas de résultat de vérification positif.

4. Procédé selon la revendication 1, 2 ou 3,
**caractérisé en ce que**
la plateforme de communication universelle (21) pour la vérification si l'appareil cible (11) a le droit de se connecter au réseau (13) échange des informations avec au moins une plateforme de communication spécifique (25, 27).

5. Procédé selon l'une quelconque des revendications 1 à 4,
**caractérisé en ce que**
la plateforme de communication universelle (21) peut recevoir des messages de connexion électroniques par l'intermédiaire de plus d'une adresse de réception, étant donné que, notamment, à chaque adresse de réception est affectée une plateforme de communication spécifique (25, 27).

6. Procédé selon l'une quelconque des revendications 1 à 5,
**caractérisé en ce que**
l'appareil cible (11), après la réussite de la connexion au réseau (13), envoie une confirmation de connexion à la plateforme de communication universelle (21) et/ou à la plateforme de communication spécifique (25, 27) et, après la réception de la confirmation de connexion, l'appareil cible (11) est affecté à l'utilisateur (17).

7. Procédé selon l'une quelconque des revendications 1 à 6,
**caractérisé en ce que**
le détecteur photosensible (31) de l'appareil cible (11) est automatiquement désactivé après la réussite de la connexion au réseau (13).

8. Procédé selon l'une quelconque des revendications 1 à 7,
**caractérisé en ce que**
- l'appareil cible (11), en cas d'échec de la connexion au réseau (13), génère et sort un fichier d'erreur,
- le fichier d'erreur est reçu par un terminal (18) de l'utilisateur (17) et envoyé à la plateforme de communication universelle 21) et
- la plateforme de communication universelle (21) exploite le fichier d'erreur et renvoie une information en retour correspondante à l'utilisateur (17).

9. Procédé selon la revendication 8,
**caractérisé en ce que**
la plateforme de communication universelle (21) échange des informations pour la génération de l'information en retour avec au moins une plateforme de communication spécifique (25, 27).

10. Procédé selon la revendication 9,
**caractérisé en ce que**
la plateforme de communication universelle (21) convertit le fichier d'erreur en un protocole d'erreurs et envoie le protocole d'erreurs à la au moins une plateforme de communication spécifique (25, 27).
